# EUROPEAN PATENT APPLICATION

(11) **EP 4 790 964 A1**
(43) Date of publication of application: **12.08.2026**
(21) Application number: 24891671.0
(22) Date of filing: 22.10.2024
(51) Int. Cl.: H04L 51/48, H04L 51/58, H04L 69/16, H04W 40/22, H04W 4/14, H04W 88/06, H04W 84/06

(54) **ELECTRONIC DEVICE AND METHOD FOR TRANSMITTING MESSAGE OF ELECTRONIC DEVICE**

(30) Priority: 14.11.2023 KR 20230157012; 21.12.2023 KR 20230188662
(71) Applicant: Samsung Electronics Co., Ltd., Suwon-si, Gyeonggi-do 16677 (KR)
(72) Inventor: KIM, Sohmann, Suwon-si, Gyeonggi-do 16677 (KR)
(74) Representative: Gulde & Partner
(86) International application number: PCT/KR2024/016103
(87) International publication number: WO 2025/105724

(57) **Abstract**

The server may comprise a processor, a communication circuit, and a memory, wherein the processor is configured to: set a reply path (TP-RP) on an electronic device on the basis of the execution of instructions stored in the memory; transmit an SMS center (SMSC) number of the server and an address (TP-originated address) of an external device to a number (TP-destination address) of the electronic device; control the electronic device to transmit an SMS to the external device by using the SMSC number of the server and the address of the external device on the basis of the TP-RP value; transmit a message by using a non-terrestrial network or transmit an SMS to an LTE network on the basis of a connection state of the external device to the non-terrestrial network; transmit a message indicating that SMS transmission is completed to the electronic device on the basis of completion of the message transmission or SMS transmission to the external device; set the TP-RP value on the basis of the connection state of the external device to the non-terrestrial network; and determine an SMS transmission path to the external device on the basis of the TP-RP value.

## Description

### [Technical Field]

The disclosure relates to an electronic device and, for example, to a message transmission method of an electronic device capable of transmitting a short message service (SMS) message to an external device through a network.

### [Background Art]

A portable electronic device (hereinafter, referred to as an electronic device), which is represented by a smartphone, may provide various message transmission/reception services, such as a short message service (SMS), a multimedia message service (MMS), and a rich communication service (RCS). An SMS is a scheme of transmitting messages by using a limited bandwidth in a mobile network, has an advantage of stably transmitting low-capacity text messages, and is thus widely used in mobile wireless communications.

The electronic device may also provide wireless communication through a satellite network, and provide a message transmission/reception service such as an SMS. A low earth orbit (LEO) indicates a low altitude (e.g., 200 km to 2,000 km) artificial satellite orbit from the ground, and since the electronic device needs to transmit and receive signals to and from the low earth orbit satellite, the communication quality may be relatively low in the case of a satellite network. Therefore, a non-terrestrial network (NTN) standard deals with various requirements not considered in terrestrial networks, such as large delay time, large beam coverage and delay difference, movement of a base station, and large Doppler shift. Some communication service operators are attempting to provide message services such as an SMS for shadow areas not corresponding to the coverage of terrestrial networks by deploying LEO satellites equipped with base stations.

### [Disclosure of Invention]

### [Technical Problem]

In order to exchange messages in both directions in an IoT satellite network, a manufacturer other than the 3GPP may need to define a protocol, and a separate application may need to be used by a transmission UE and a reception UE.

When receiving a message from a transmission UE, a reception UE may transmit the message by using an SMS application or a message application installed by default, but there is a limitation in transmitting the message to a transmission UE using a non-terrestrial network (e.g., satellite network or IoT satellite network) since the message is transferred to a cellular network (e.g., LTE network) of the transmission UE. In this case, the reception UE needs to install a separate application to transmit an SMS to the transmission UE using the non-terrestrial network, which is inconvenient.

A server may include a processor, a communication circuit, and a memory, wherein the processor, based on instructions stored in the memory being executed, configures a TP-replay path (RP) on an electronic device, transmits an SMS center (SMSC) number of the server and an address (TP-originated address) of an external device to a number (TP-destination address) of the electronic device, controls the electronic device to transmit an SMS to the external device by using the SMSC number of the server and the address of the external device, based on a value of the TP-RP, transmits a message by using a non-terrestrial network or transmit the SMS by using an LTE network, based on a connection state of the external device to the non-terrestrial network, transmits a message indicating that SMS transmission has been completed to the electronic device, based on completion of message transmission or SMS transmission to the external device, configures the value of the TP-RP, based on the connection state of the external device to the non-terrestrial network, and determines an SMS transmission path to the external device, based on the value of the TP-RP.

An electronic device may include a processor, a communication circuit, and a memory, wherein the processor, based on instructions stored in the memory being executed, identifies, based on reception of a message of an external device from a server, a TP-reply path (RP) of the message, determines, based on the TP-RP on the message, an address for transmission of a short message service (SMS), requests message transmission from the server to transmit the message to the external device, receives, from the server, a bounce back message indicating that the transmission of the SMS has been completed, and after receiving the bounce back message, determines, based on a TP-RP on the bounce back message, an address for transmission of the SMS to the external device.

An operation method may include identifying, based on reception of a message of an external device from a server, a TP-reply path (RP) of the message, determining, based on the TP-RP on the message, an address for transmission of a short message service (SMS), requesting SMS transmission from the server to transmit the SMS to the external device, receiving, from the server, a bounce back message indicating that the transmission of the SMS has been completed, and after receiving the bounce back message, determining, based on a TP-RP on the bounce back message, an address for transmission of the SMS to the external device.

A server and an electronic device according to the disclosure can transmit an SMS to a transmission UE using a non-terrestrial network without installing a separate application.

A server according to the disclosure can identify whether a transmission UE is connected to a non-terrestrial network, and automatically configure, based on a connection state to the non-terrestrial network, an SMS transmission path between the non-terrestrial network and a cellular network.

The advantageous effects achieved in the disclosure are not limited to the above-described effects, and other unmentioned advantageous effects can be clearly understood from the description below by those skilled in the art to which the disclosure belongs.

### [Brief Description of Drawings]

FIG. 1 is a block diagram illustrating an electronic device in a network environment according to various embodiments.
FIG. 2 illustrates an electronic device and a long-distance communication network environment according to an embodiment.
FIG. 3 illustrates a connection of an electronic device according to an embodiment.
FIG. 4 illustrates a non-terrestrial network system according to an embodiment.
FIG. 5 is a block diagram illustrating a server according to an embodiment.
FIG. 6 illustrates a process in which a transmission UE transmits a message to a reception UE by using a server according to an embodiment.
FIG. 7 illustrates a process in which a reception UE transmits a message to a transmission UE by using a server according to an embodiment.
FIG. 8 is a block diagram illustrating a process of transmitting a message on a system including a transmission UE, a server, and a reception UE according to an embodiment.
FIGS. 9A and 9B flowcharts illustrating a message transmission method by a server according to an embodiment.
FIG. 10 is a flowchart illustrating a message transmission method by a server according to an embodiment.
FIG. 11 illustrates a situation in which a transmission result of a message is displayed on an electronic device and a transmission path of a message to be transmitted thereafter is configured according to an embodiment.
FIG. 12 is a flowchart illustrating a message transmission method by an electronic device according to an embodiment.

### [Mode for the Invention]

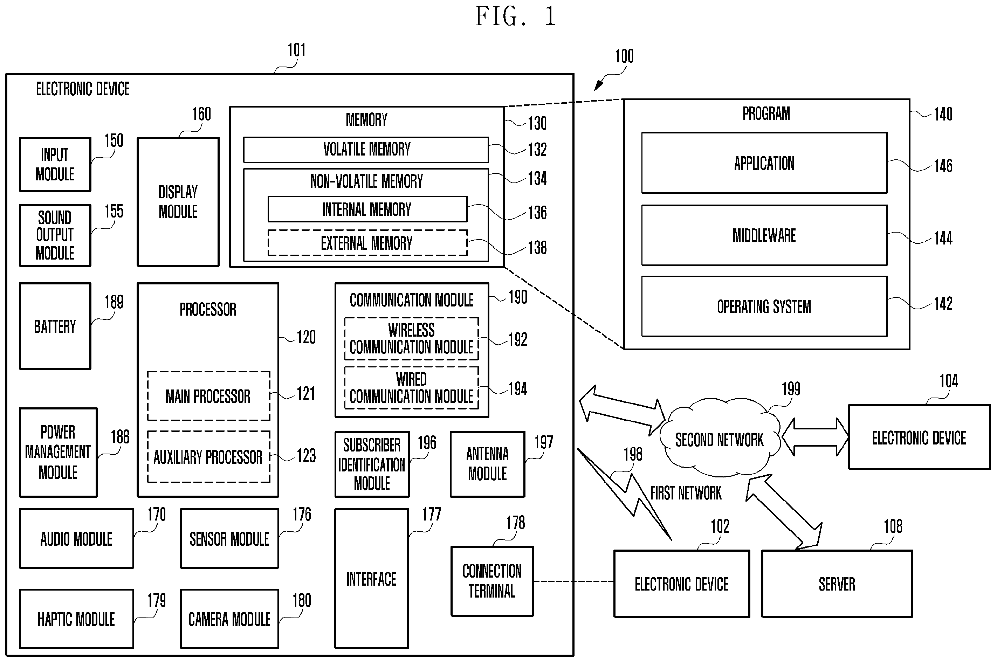

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

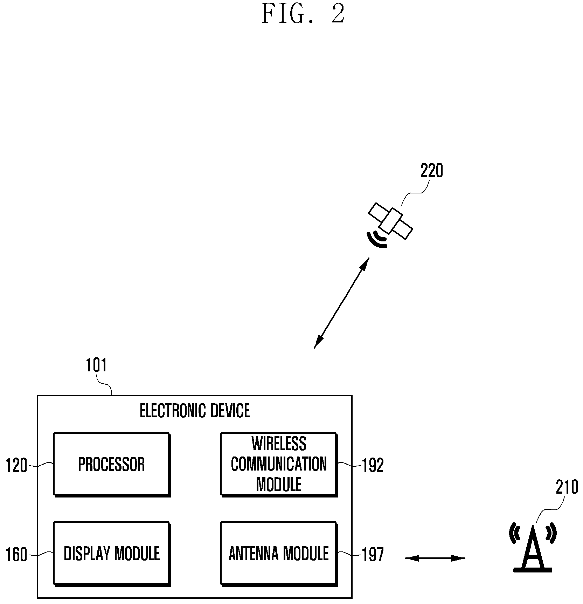

FIG. 2 illustrates an electronic device and a long-distance communication network environment according to an embodiment.

An electronic device (e.g., the electronic device 101 of FIG. 1) may transmit and/or receive data through a terrestrial network and/or a non-terrestrial network.

The terrestrial network may refer to a network capable of providing data communication through a terrestrial wireless communication device 210. For example, the terrestrial wireless communication device 210 may include a base station located on the ground (e.g., fixed to the ground). The terrestrial wireless communication device 210 may support at least one of various communication schemes supported by the electronic device 101. For example, the terrestrial wireless communication device 210 may include an eNodeB or a gNodeB, but is not limited to thereto in terms of type.

The non-terrestrial network may refer to a network capable of providing data communication through at least one non-terrestrial wireless communication device 220. For example, the non-terrestrial wireless communication device 220 may include at least one of various communication devices, such as a base station and a repeater, which are not located on the ground. For example, the non-terrestrial wireless communication device 220 may include a satellite and/or an unmanned aircraft, but is not limited thereto in terms of type. For example, the satellite may include a low-earth orbit (LEO) satellite, a medium-earth orbit (MEO) satellite, a geostationary earth orbit (GEO) satellite, and/or a high elliptical orbit (HEO) satellite. For example, the satellite may include a mobile satellite and/or a geostationary satellite.

The non-terrestrial wireless communication device 220 may support at least one of various wireless communication schemes. For example, the non-terrestrial wireless communication device 220 may support a non-terrestrial network (NR NTN) defined by the 3^{rd} Generation Partnership Project (3GPP). Alternatively, the non-terrestrial wireless communication device 220 may support at least one of various communication schemes based on various communication standards, such as LTE, global system for mobile communications (GSM), and code-division multiple access (CDMA), but is not limited thereto in terms of type.

The terrestrial network and the non-terrestrial network may be independent of each other. Alternatively, the terrestrial network and the non-terrestrial network may be included in one or more associated networks (e.g., networks provided by the same service provider).

The electronic device 101 may perform wireless communication through the non-terrestrial network when communication with the terrestrial network is impossible or not smooth. Alternatively, in some cases, the electronic device 101 may perform wireless communication through the non-terrestrial network regardless of the communication state with the terrestrial network.

The processor 120 may execute, for example, software (e.g., program 140) to control at least one other component (e.g., a hardware or software component) of the electronic device 101 connected to the processor 120, and perform various data processing or operations. According to an embodiment, as at least a part of data processing or operations, the processor 120 may store a command or data received from another element (e.g., the sensor module 176 or the communication module 190) in the volatile memory 132, process the command or data stored in the volatile memory 132, and store result data in the nonvolatile memory 134. According to an embodiment, the processor 120 may include a main processor 121 (e.g., a central processing unit or an application processor) or an auxiliary processor 123 (e.g., a graphic processing unit, a neural processing unit (NPU), an image signal processor, a sensor hub processor, or a communication processor) which may be independently operated or operated together with the main processor 121. For example, when the electronic device 101 includes a main processor 121 and an auxiliary processor 123, the auxiliary processor 123 may use power lower than the main processor 121 or may be configured to be specialized for a designated function. The sub-processor 123 may be implemented separately from, or as a part of, the main processor 121.

The auxiliary processor 123 may, for example, instead of the main processor 121 while the main processor 121 is in an inactive (e.g., sleep) state, or together with the main processor 121 while the main processor 121 is in an active (e.g., application execution) state, control at least some of functions or states related to at least one component (e.g., the display module 160, the sensor module 176, or the communication module 190) of the elements of the electronic device 101. According to an embodiment, the secondary processor 123 (e.g., image signal processor or communication processor) may be implemented as a part of another element (e.g., camera module 180 or communication module 190) functionally related thereto.

The display module 160 may visually provide information to the outside (e.g., a user) of the electronic device 101. The display module 160 may include, for example, a display, a holographic device, or a projector and a control circuit for controlling the same. According to an embodiment, the display module 160 may include a touch sensor configured to detect a touch, or a pressure sensor configured to measure the strength of a force generated by the touch.

A UI (e.g., a screen showing a connection state with a network, or a screen showing the direction of a non-terrestrial network (e.g., a satellite)) associated with a terrestrial network and/or a non-terrestrial network may be displayed. The UI related to the terrestrial network and/or the non-terrestrial network is not limited thereto.

A UI indicating information related to the terrestrial network and/or the non-terrestrial network may include, for example, at least one of the type of the network (e.g., cellular communication (3G, 4G, or 5G), short-range communication (e.g., BT or WIFI), or satellite communication), the type of the network service provider (e.g., a satellite communication service provider (e.g., Iridium) or an emergency service provider (ESP)), the signal strength of the network (e.g., signal strength bars, RSSI, or RSRP), the direction of a communication device (satellite) included in the network (e.g., orientation, elevation angle, or azimuth angle), presence information, or a network communication state (e.g., idle, transmit, or receive).

A service associated with the terrestrial network and/or the non-terrestrial network may include, for example, at least one of an emergency message transmission service (e.g., emergency service status information (e.g., emergency service available display), public institution information, emergency contact information, commercial expressions minimizing user text inputs, and guidance information for questionnaires for promptly transmitting an emergency situation (e.g., type of accident, injured parts, medical information (e.g., age, gender, disease information, and medication information))), a messaging service (e.g., small message service (SMS), MMS, or RCS message), a voice call, a video call, a data communication service (e.g., various application information providing data communication including an Internet browser app), a location sharing service (e.g., longitude/latitude coordinates, MAP information associated with the location of the non-terrestrial communication device 220, navigation, or street view), and a UI related to a dialer and/or an indicator.

The various UI examples are not limited to the examples mentioned above, and may also be provided through other output devices (e.g., the sound output module 155 of FIG. 1).

According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication module). The corresponding communication module among these communication modules may communicate with the external electronic device 104 through a first network 198 (e.g., a short-range communication network such as Bluetooth, wireless fidelity (Wi-Fi) direct, or infrared data association (IrDA)) or a second network 199 (e.g., a long-range communication network such as a legacy cellular network, a 5G network, a next-generation communication network, Internet, or a computer network (e.g., a local area network (LAN) or a wide area network (WAN))). The various types of communication modules may be integrated into one element (e.g., a single chip), or may be implemented as multiple elements (e.g., multiple chips) separately. The wireless communication module 192 may identify or authenticate the electronic device 101 in a communication network, such as the first network 198 or the second network 199, by using subscriber information (e.g., international mobile subscriber identity (IMSI)) stored in the subscriber identity module 196.

The wireless communication module 192 may support a 5G network beyond a 4G network and next-generation communication technologies, for example, new radio access technology (NR). NR access technologies may support high-speed transmission of high-capacity data (enhanced mobile broadband (eMBB)), minimization of UE power and connection of multiple UEs (massive machine type communications (mMTC)), or high reliability and low latency (ultra-reliable and low-latency communications (URLLC)). The wireless communication module 192 may support a high-frequency band (e.g., mmWave band) in order to achieve a high data transmission rate, for example. The wireless communication module 192 may support various technologies for ensuring performance in the high frequency band, for example, beamforming, massive multiple-input and multiple-output (MIMO), full dimensional MIMO (FD-MIMO), array antenna, analog beam-forming, or large scale antenna. The wireless communication module 192 may support various requirements specified for the electronic device 101, an external electronic device (e.g., the electronic device 104), or a network system (e.g., the second network 199). According to an embodiment, the wireless communication module 192 may support a peak data rate (e.g., 20 Gbps or more) for eMBB implementation, a loss coverage (e.g., 164 dB or less) for mMTC implementation, or a U-plane latency (e.g., 0.5ms or less for each of a downlink (DL) and an uplink (UL), or 1ms or less for a round trip) for URLLC implementation.

The wireless communication band supported by the electronic device 101 may include a short-range radio communication band (e.g., BT or Wi-Fi), a ground network (e.g., cellular network) communication band, and/or a non-terrestrial network band, but is not limited thereto.

The electronic device 101 may support a frequency band (e.g., n255, 256) related to non-terrestrial network wireless communication. The electronic device 101 may perform non-terrestrial network wireless communication by using at least a part of a frequency band associated with terrestrial network wireless communication.

The antenna module 197 may transmit signals or power to the outside (e.g., an external electronic device) or receive the same from the outside. According to an embodiment, the antenna module 197 may include an antenna including a radiating element including a conductor or a conductive pattern formed on a substrate (e.g., PCB). According to an embodiment, the antenna module 197 may include multiple antennas (for example, an array antenna). In this case, at least one antenna suitable for a communication scheme used in a communication network such as the first network 198 or the second network 199 may be selected from among the multiple antennas by the communication module 190, for example. A signal or power may be transmitted or received between the communication module 190 and an external electronic device through the selected at least one antenna. According to an embodiment, in addition to the radiating element, other components (e.g., radio frequency integrated circuits (RFICs)) may also be formed as part of the antenna module 197.

The electronic device 101 may perform wireless communication with the non-terrestrial network by using at least one antenna among the multiple antennas included in the antenna module 197. The at least one antenna supporting the non-terrestrial wireless communication may include a dedicated antenna and/or a shared antenna. The dedicated antenna may include an antenna supporting the non-terrestrial network. The shared antenna may include an antenna that supports both other types of networks and the non-terrestrial network. For example, the electronic device 101 may communicate with at least one satellite (e.g., a GNSS satellite or a satellite for emergency message service) by using a single non-terrestrial network-dedicated antenna. For example, the common antenna may include an antenna supporting a short-range communication network (e.g., a Bluetooth network or a Wi-Fi network) and/or a terrestrial network (e.g., a long-term evolution (LTE) network). The electronic device 101 may support a non-terrestrial network by using multiple antennas among antennas supporting the terrestrial network.

Hereinafter, a satellite is mainly mentioned in the disclosure as a non-terrestrial wireless communication device 220, and even though the satellite is described as providing wireless communication based on a particular radio access technology (RAT) (e.g., LTE) or a particular function (e.g., a base station), this is only an example, and the type is not limited, which can be easily understood by those skilled in the art.

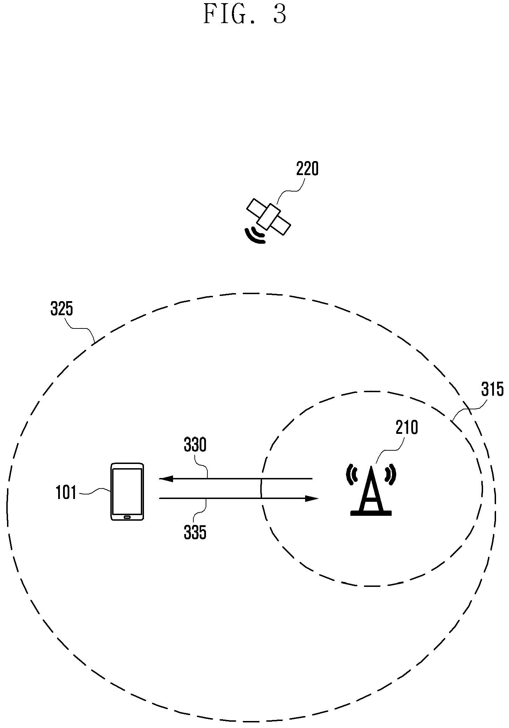

FIG. 3 illustrates a connection of an electronic device according to an embodiment.

According to an embodiment, the electronic device 101 may be located within a coverage 315 (hereinafter, may be referred to as a terrestrial wireless communication coverage 315) of the terrestrial wireless communication device 210 and/or a coverage 325 (hereinafter, may be referred to as a non-terrestrial wireless communication coverage 325) of the non-terrestrial wireless communication device 220. The non-terrestrial wireless communication coverage 325 may be relatively larger (e.g., 50 times or more larger) than the terrestrial wireless communication coverage 315. For example, the non-terrestrial wireless communication coverage 325 may cover an area not covered by the coverage 315 of the terrestrial wireless communication device 210, and thus the electronic device 101 may perform communication even in an area in which terrestrial wireless communication is not supported.

The electronic device 101 may perform a cell scan within the terrestrial wireless communication coverage 315 and/or the non-terrestrial wireless communication coverage 325. The electronic device 101 may identify a cell provided by the terrestrial radio communication device 210 and/or a cell provided by the non-terrestrial radio communication device 220, based on a cell scan result. In case that there is a cell satisfying a cell selection condition, the electronic device 101 may perform at least some operations for connection to a network (e.g., a non-terrestrial network and/or a terrestrial network). Here, the connection to the network may include, for example, at least a part of a preceding operation for registration to the network (for example, camping on or a connection procedure (e.g., a random access (RA) procedure)) and/or a registration operation to the network (e.g., attachment or registration), but is not limited thereto. The electronic device 101 may perform at least a part of the disconnection operation when disconnection from the network is necessary (e.g., moving to another network). A disconnection operation from the network may include at least some of a detachment, a disconnection, and/or an RLF declaration from the network, and is not limited thereto.

The electronic device 101 may perform at least some operations of cell scanning, disconnection from the network, and/or connection to the network according to the movement 330 or 335.

When the electronic device 101 is located inside the terrestrial communication coverage 315 that is included in the non-terrestrial wireless communication coverage 325, or is located in a boundary area of the terrestrial communication coverage 315, the electronic device 101 may perform connection to the terrestrial network and/or the non-terrestrial network, based on a policy (e.g., a priority policy) of the electronic device 101.

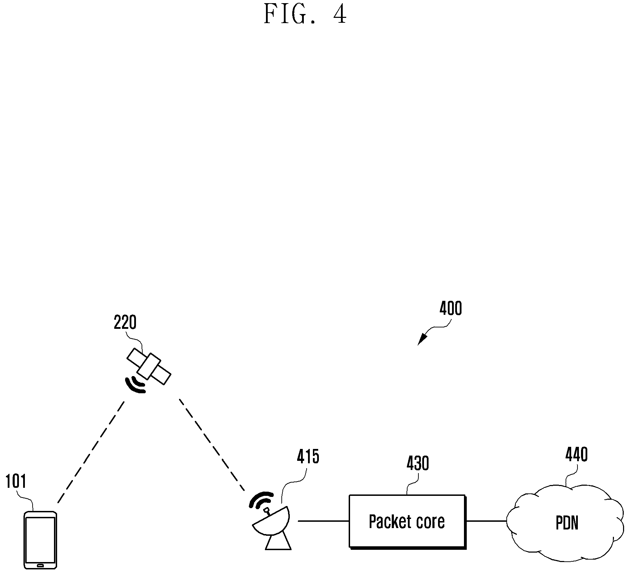

FIG. 4 illustrates a non-terrestrial network system 400 according to an embodiment.

Referring to FIG. 4, the non-terrestrial network system 400 may include a non-terrestrial wireless communication device 220, a radio unit 415, a packet core 430, and a packet data network (PDN) 440.

The non-terrestrial network system 400 may be implemented in a regenerative scheme, for example. When implemented in the regenerative scheme, the at least one non-terrestrial wireless communication device 220 may include a base station (e.g., eNode B). The non-terrestrial network system 400 may be implemented in a bent-pipe scheme, for example. When implemented in the bent-pipe scheme, the at least one non-terrestrial wireless communication device 220 may include a repeater that converts (e.g., amplifies) a signal and transfers the same. There is no limitation on the implementation scheme of the non-terrestrial network system 400 and the role of the non-terrestrial wireless communication device 220.

The non-terrestrial wireless communication device 220 may include at least one satellite. The non-terrestrial wireless communication device 220 may perform communication with the electronic device 101 by using, for example, a terrestrial network (e.g., a cellular network) band and/or a non-terrestrial network band. The terrestrial network band may be, for example, an operation band supported by long-term evolution (LTE) and/or new radio (NR), but is not limited thereto. The non-terrestrial network band may include, but is not limited to, n255 and/or n256 bands defined in the 3GPP.

The at least one radio unit 415 may receive a signal of the non-terrestrial wireless communication device 220 and transmit the same to the packet core 430. The radio unit 415 and the non-terrestrial wireless communication device 220 may perform communication by using, for example, the non-terrestrial network band. The non-terrestrial network band may be different from the terrestrial network band, but may be configured to be the same in some cases. The at least one packet core 430 may transmit and receive data associated with the electronic device 101 through the radio unit 415.

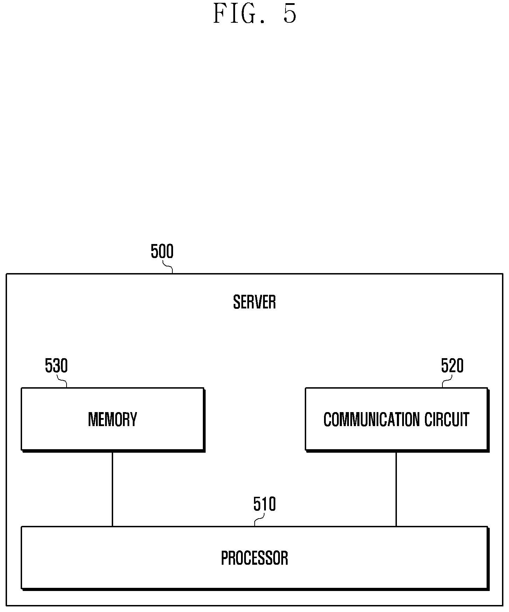

FIG. 5 is a block diagram illustrating a server according to an embodiment.

Referring to FIG. 5, a server 500 may include a processor 510, a communication circuit 520, and/or a memory 530, and some of the illustrated elements may be omitted or replaced. For example, the processor 510 may include a communication processor that supports satellite communication. For example, the processor 510 may be operatively, functionally, and/or electrically connected to the communication circuit 520 and/or the memory 530.

According to an embodiment, the processor 510 may be configured to perform operations or data processing for controlling and/or communicating with the elements of the server 500, and may include one or more processors. The processor 510 may include at least some of the configurations and/or functions of the processor 120 of FIG. 1.

According to an embodiment, there is no limitation on that the processor 510 may perform operations and data processing functions which can be implemented on the server 500, but hereinafter, a description will be made in detail regarding features related to control of the communication circuit 520 and the non-terrestrial wireless communication device (e.g., the non-terrestrial wireless communication device 220 of FIG. 2). The operations of the processor 510 may be performed by loading instructions stored in the memory 530.

According to an embodiment, the server 500 may include one or more memories 530, and the memory 530 may include a main memory and a storage. The main memory may be configured by a volatile memory, such as a dynamic random access memory (DRAM), a static RAM (SRAM), or a synchronous dynamic RAM (SDRAM). Alternatively, the memory 530 is a non-volatile memory, and may include a storage device having a large storage capacity. The storage may include at least one of a one-time programmable ROM (OTPROM), a PROM, an EPROM, an EEPROM, a mask ROM, a flash ROM, a flash memory, a hard disk drive, or a solid state drive (SSD). The memory 530 may store various file data, and the stored file data may be updated according to the operation of the processor 510. The memory 530 may include at least some of the configurations and/or functions of the memory 130 of FIG. 1.

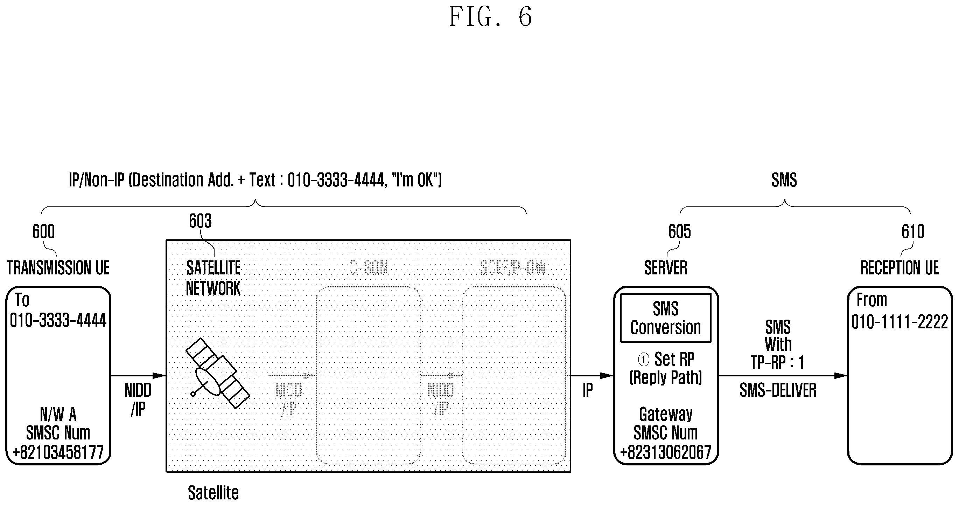

FIG. 6 illustrates a process in which a transmission UE transmits a message to a reception UE by using a server according to an embodiment.

In FIG. 6, a transmission UE 600 may transmit a message to a server 605 through a satellite network 603. The satellite network 603 may include the non-terrestrial wireless communication device 220 of FIG. 2.

The server 605 may transmit the message received from the transmission UE 600 to a reception UE 610.

According to FIG. 6, the server 605 may transmit an SMS to the reception UE 610 through a cellular network (e.g., an LTE network) by using an SMS center (SMSC) stored in the SIM of the transmission UE 600 within the cellular coverage. The server 605 may transfer the SMS of the transmission device 600 to a basic SMS application of the reception UE 610 by using a cellular network (e.g., an LTE network). The server 605 may receive the SMS transmitted by the transmission UE 600 through the IoT satellite network 603 outside the cellular coverage. In this case, the transmission UE 600 may be capable of performing satellite communication.

The transmission UE 600 may transmit a text message in an Internet protocol (IP) or non-IP format and recipient information to the server 605. The server 605 may convert the received text message into an SMS format and transmit the message to the reception UE 610 by using the recipient information. In this case, the reception UE 610 may also receive the message from the transmission UE 600 even if the reception UE has no satellite communication function.

In this case, the transmission UE 600 may include a modem capable of performing satellite communication. The transmission UE 600 may perform conversion into text in an IP or non-IP format by using a modem capable of performing satellite communication, and transfer the converted text to the server 605 (SMS gateway). The server 605 may convert the received message in the text format into an SMS.

The message in the text format may include the SMSC number of the transmission UE 600 and the contents (e.g., I'm OK).

The server 605 may configure a transfer protocol (TP)-reply path (RP) to 1, based on the transmission UE 600 being connected to the non-terrestrial network (or satellite network 603). The server 605 may include, in a message, the SMSC number of the server 605 (SMS gateway) and the TP-OA (originated address) of the transmission UE 600, and transmit the message to the reception UE 610. The server 605 may further include, in the message, information indicating that the transmission has been performed through the non-terrestrial network (or satellite network 603).

The TP may refer to a transmission protocol at the data transmission side. The server 605 may use a protocol such as transmission control protocol (TCP) or user datagram protocol (UDP) for data transmission. The TCP is a reliable and connection-oriented protocol that can minimize data loss or damage and ensure data transmission in sequence. The UDP is a connectionless protocol that does not guarantee data reliability, but may be used when prompt transmission is required.

The RP may refer to a reply path at the data reception side. The RP may refer to a path for transmitting a response after receiving data. The RP may use the same protocol as the TP. That is, the TP-RP may represent the process of data transmission and response, and may be used mainly in bidirectional communication. The transmission UE 600 may use the TP to transmit data, and the reception UE 610 may use the RP to transmit the response.

The reception UE 610 may identify a TP-RP value, based on the operation of 3GPP 123.040 when transmitting by using the basic SMS application.

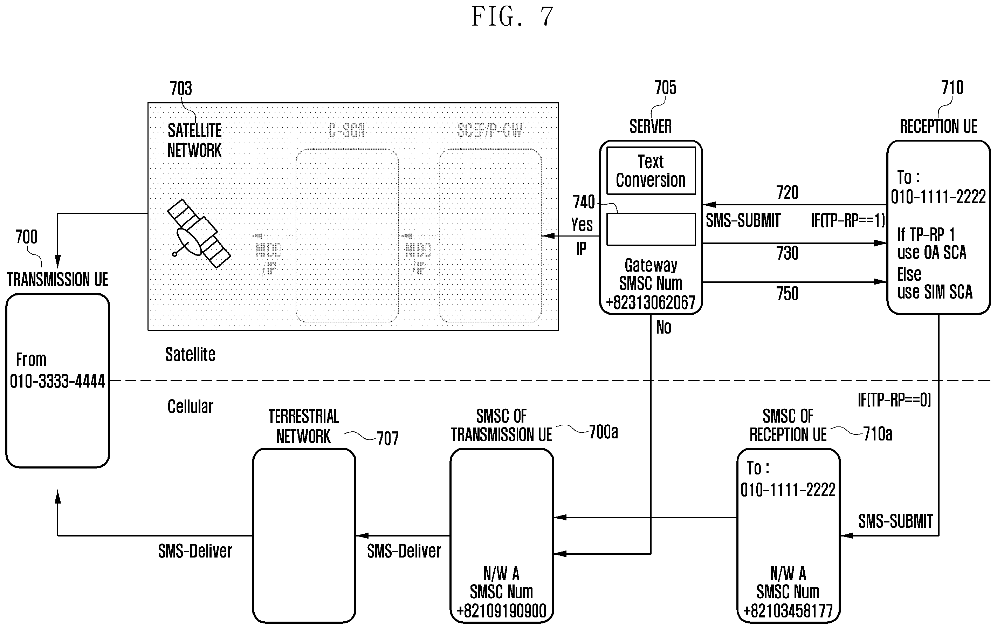

FIG. 7 illustrates a process in which a reception UE transmits a message to a transmission UE by using a server according to an embodiment.

In operation 720 of FIG. 7, a reception UE 710 (e.g., the reception UE 610 of FIG. 6) may transmit an SMSC number of a server 705 (e.g., the server 605 of FIG. 6) and a number (TP-OA) of a transmission UE 700 (e.g., the transmission UE 600 of FIG. 6) when a TP-RP is 1. The reception UE 710 may use an SMSC 710a stored in an SIM of the reception UE 710 to transmit an SMS when the TP-RP is 0.

In operation 730 of FIG. 7, the server 705 may automatically transmit a bounce back message to the reception terminal 710 to configure an SMS transmission path. The server 705 may transmit a bounce back message in which the TP-RP is configured to 1 in order to configure the satellite path. The bounce back message mentioned in operation 730 may be transmitted by the server 705 to the reception UE 710 by default. The bounce back message mentioned in operation 730 may be used in a situation in which the reception UE 710 transmits a message by using a satellite network 703 continuously.

In operation 740 of FIG. 7, the server 705 may identify a connection state of the transmission UE 700 to the satellite network 703. The server 705 may transmit a message by using the satellite network 703, based on identifying that the transmission UE 700 is connected to the satellite network 703. Alternatively, the server 705 may respond with or transmit an SMS by using a terrestrial network 707 (e.g., LTE core), based on the transmission UE 700 not being connected to the satellite network 703. For example, when the server 705 determines that the transmission UE 700 is not connected to the satellite network 703, the server 705 may transmit an SMS to an SMS center (SMSC) 700a of the transmission UE 700, and the SMSC 700a of the transmission UE 700 may transmit the SMS to the transmission UE 700 through the terrestrial network 707.

According to an embodiment, when the transmission UE 700 is connected to the server 705 by using an Internet protocol (IP), the server may determine whether a TCP/IP socket has been connected to the transmission UE 700 by using a keep alive packet. The server 705 may determine that the transmission UE 700 is connected to the non-terrestrial network (or satellite network 703), based on the TCP/IP socket being connected to the transmission UE 700.

According to an embodiment, the server 705 may convert the SMS into a text format and transmit the same to a C-IoT core network by using a secure channel when the transmission UE 700 is connected to the server 705 by using a non-Internet protocol (Non-IP), and determine that the transmission UE 700 is connected to the non-terrestrial network (or satellite network 703), based on detection of an error in the transmitted message.

According to an embodiment, the server 705 may execute home location register (HLR) lookup, request user information for a mobile station integrated system digital network (MSISDN) of the transmission UE 700, and determine whether the transmission UE 700 is connected to the non-terrestrial network (or satellite network 703), based on the user information of the transmission UE 700.

In operation 750 of FIG. 7, after completing the message transmission, the server 705 may transmit the bounce back message to the reception UE 710 to inform a network to which the SMS has been transmitted. The server 705 may configure the TP-RP to 1 in case that the transmission UE 700 is connected to the satellite network 703. When the transmission UE 700 is not connected to the satellite network 703, the server 705 may configure the TP-RP to 0. The bounce back message mentioned in operation 750 may differ from the bounce back message mentioned in operation 730. The bounce back message mentioned in operation 730 may refer to a message automatically transmitted from the server 705 to the UE 710 in order to configure the satellite path in a state in which the TP-RP is configured to 1. On the other hand, for the bounce back message mentioned in operation 750, the TP-RP may be differently configured as 0 or 1 according to the connection state of the transmission UE 700 to the satellite network 703. The bounce back message mentioned in operation 750 may be transmitted from the server 705 to the reception UE 710. The bounce back message mentioned in operation 750 may be used to inform, when the message transmitted from the reception UE 710 is transmitted to the transmission UE 700, whether the message is transmitted through the satellite network 703 or the terrestrial network 707. That is, the bounce back message mentioned in operation 750 may be used to correct an actual message transmission path.

According to an embodiment, the server 705 may transmit, based on the completion of the SMS transmission to the transmission UE 700, a message indicating the completion of the SMS transmission to the reception UE 710, and may differently configure an SMS transmission path of the reception UE 710, based on the connection state between the transmission UE 700 and the satellite network 703.

For example, the server 705 may configure a TP-RP value so that the reception UE 710 can transmit the SMS to the transmission UE 700 by using the satellite network 703, based on the transmission UE 700 being connected to the satellite network 703. On the other hand, the server 705 may configure a TP-RP value so as to transmit an SMS to the transmission UE 700 by using the SMSC 710a of the reception UE 710, based on the transmission UE 700 not being connected to the satellite network 703.

According to an embodiment, the server 705 may configure a short message type of TP-protocol ID so that a hidden SMS can be used. When multiple bounce back messages are displayed on the reception UE 710, the usability of the reception UE 710 may be deteriorated. The server 705 may determine an SMS transmission path without displaying multiple bounce back messages on the reception UE 710 through the hidden SMS.

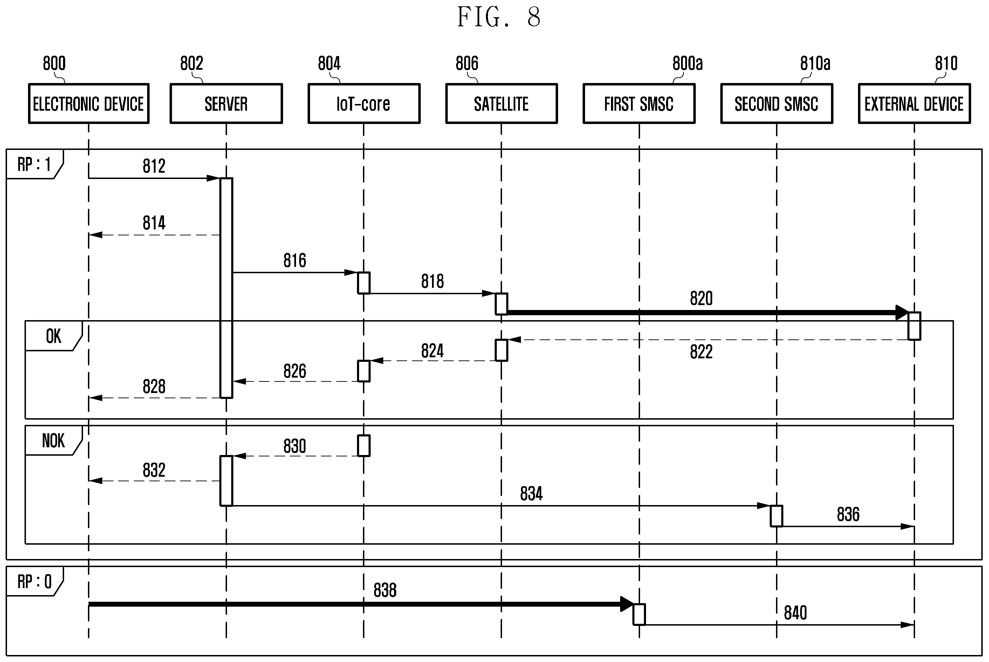

FIG. 8 is a block diagram illustrating a process of transmitting a message on a system including an electronic device, a server, and an external device according to an embodiment.

Referring to FIG. 8, a system for transmitting a message may include an electronic device 800, a server 802 (e.g., the server 605 of FIG. 6 or the server 705 of FIG. 7), an IoT-core 804, a satellite 806 (e.g., the satellite network 603 of FIG. 6 or the satellite network 703 of FIG. 7), a first SMSC 800a (e.g., the SMSC 700a of the transmission UE 700 of FIG. 7), a second SMSC 810a (e.g., the SMSC 710a of the reception UE 710 of FIG. 7), and an external device 810. The electronic device 800 may include the electronic device 101 of FIG. 1, and the reception UE 610 of FIG. 6, or the reception UE 710 of FIG. 7. The external device 810 may include the transmission UE 600 of FIG. 6 or the transmission UE 700 of FIG. 7.

The electronic device 800 may not support a satellite service or may not be connected to a non-terrestrial network (e.g., the satellite 806). In a situation where the electronic device 800 receives a message from the external device 810 connected to the non-terrestrial network (e.g., the satellite 806), if a separate application is not installed, there is a limitation in transmitting the message to the external device 810 connected to the non-terrestrial network. The electronic device 800 according to the disclosure may provide a method for transmitting an SMS to an external device 810 connected to a non-terrestrial network without installing a separate application.

In operation 812, the electronic device 800 may transmit a message to the server 802.

In operation 814, the server 802 may transmit a bounce back message notifying the electronic device 800 of whether the message has been received, to the electronic device 800, based on the message having been received from the electronic device 800.

In operation 816, the server 802 may decode an address and message contents of the external device 810 to plain text, convert the same into data in the form of an IP or non-IP, and then transmit the same to the IoT-core 804 network.

In operation 818, the IoT-core 804 may transmit, to the satellite 806, data received from the server 802.

In operation 820, the satellite 806 may transmit the message to the external device 810.

In operation 822, the external device 810 may transmit the SMS or the message to the satellite 806 network.

In operation 824, the satellite 806 may transmit the SMS or the message of the external device 810 to the IoT-core 804 in the opposite direction of the transmission process.

In operation 826, the IoT-core 804 may transmit the SMS or the message to the server 802. Based on the successful transmission, in operation 828, the server 802 may transmit, to the electronic device 800, a bounce back message having a TP-RP set to 1, together with the SMS or the message of the external device 810.

If the IoT-core 804 fails to transmit the message to the external device 810 by using the satellite 806, the IoT-core 804 may transmit an error message to the server 802 in operation 830. Based on the reception of the error message, the server 802 may transmit, to the electronic device 800, a bounce back message having a TP-RP set to 0, in operation 832.

Thereafter, in operation 834, the server 802 may transmit, to the second SMSC 810a, the message to be transmitted to the external device 810 by the electronic device 800. The second SMSC 810a may indicate an SMS center corresponding to the external device 810. The server 802 may transmit the message to the external device 810 through the second SMSC 810a, based on the external device 810 not being connected to the satellite 806.

In operation 836, the second SMSC 810a may transmit the message of the electronic device 800 to the external device 810.

If the external device 810 is not connected to the satellite 806 (e.g., when the TP-RP is set to 0), the electronic device 800 may transmit the message by using the number for the first SMSC 800a in operation 838. The number for the first SMSC 800a may include the number for an SMS center for using a terrestrial network (e.g., LTE network). In operation 840, the electronic device 800 may transmit or respond with the message to the external device 810 by using the first SMSC 800a and the second SMSC 810a.

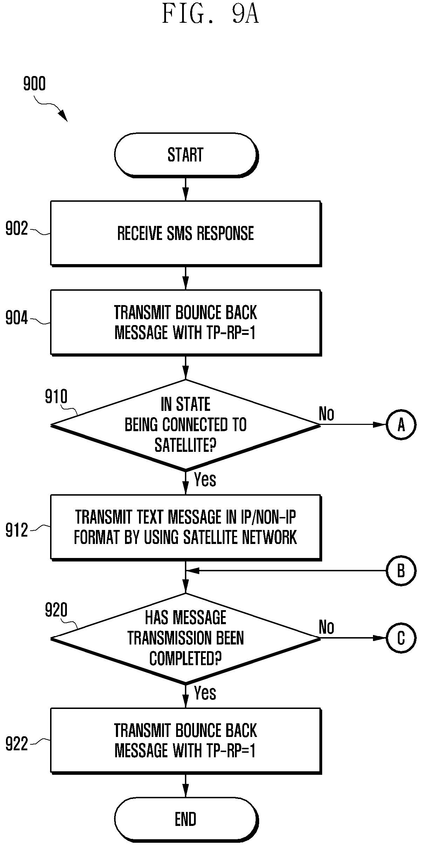

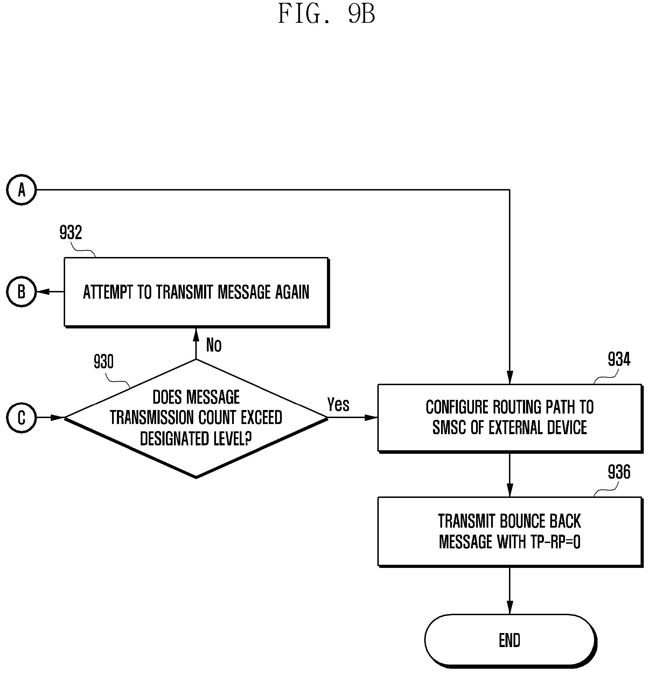

FIGS. 9A and 9B are flowcharts illustrating a message transmission method by a server according to an embodiment.

The operations described through FIG. 9A and FIG. 9B may be implemented based on instructions that may be stored in a computer recording medium or a memory (e.g., the memory 530 of FIG. 5). The illustrated method 900 may be executed by the server (e.g., the server 500 of FIG. 5) described through FIG. 1 to FIG. 8, and the above-described technical features will be omitted below. The order of the operations in FIGS. 9A and 9B may be changed, some operations may be omitted, and some operations may be simultaneously performed.

FIGS. 9A and 9B may show a process in which an electronic device (e.g., the electronic device 800 of FIG. 8 or the reception UE 710 of FIG. 7) receives a message from an external device (e.g., the external device 810 of FIG. 8 or the transmission UE 700 of FIG. 7) and transmits a response. For example, an electronic device (e.g., the electronic device 800 of FIG. 8 or the reception UE 710 of FIG. 7) may receive a message from an external device (e.g., the external device 810 of FIG. 8 or the transmission UE 700 of FIG. 7) through a non-terrestrial network (e.g., the satellite 806 of FIG. 8) and transmit a response.

In operation 902, the server 500 may receive an SMS response of an electronic device (e.g., the electronic device 800 of FIG. 8 or the reception UE 710 of FIG. 7).

In operation 904, the server 500 may transmit a bounce back message, based on the SMS response being received from the electronic device 800. The bounce back message may include a TP-reply path (RP). In order to configure a transmission path of the electronic device 800, the server 500 may determine a TP-RP value. The server 500 may transmit a bounce back message having a TP-RP set to 1, based on the SMS response being received from the electronic device 800.

In operation 910, the server 500 may identify whether the external device 810 is connected to a non-terrestrial network (e.g., a satellite 806 of FIG. 8). Here, the non-terrestrial network (e.g., the satellite 806 of FIG. 8) may refer to the non-terrestrial wireless communication device 220 of FIG. 2. The external device 810 may refer to the transmission UE 700 of FIG. 7 or the transmission UE 600 of FIG. 6.

According to an embodiment, the server 500 may determine whether a TCP/Internet protocol (IP) socket is connected to the external device 810 by using a keep alive packet when the external device 810 is connected to the server 500 via an IP. The server 500 may determine that the external device 810 is connected to the non-terrestrial network, based on the TCP/IP socket being connected to the external device 810.

According to an embodiment, when the external device 810 is connected to the server 500 through non-internet protocol (Non-IP), the server 500 may convert an SMS into a message having a text format and transmit the same to a C-IoT core network by using a secure channel, and may determine, based on detection of an error in the transmitted message, that the external device 810 is connected to the non-terrestrial network.

According to an embodiment, the server 500 may execute home location register (HLR) lookup, request user information for a mobile station integrated system digital network (MSISDN) of the external device 810, and determine whether the external device 810 is connected to the non-terrestrial network, based on the user information of the external device 810.

In operation 912, the server 500 may transmit a text message in an IP/non-IP format by using a satellite network, based on the external device 810 being connected to the non-terrestrial network.

In operation 934, the server 500 may perform routing to an operator number (or SMSC) of the external device 810, instead of the non-terrestrial network, based on the external device 810 not being connected to the non-terrestrial network.

In operation 920, the server 500 may identify whether the message has been transmitted to the external device 810.

In operation 922, the server 500 may transmit a bounce back message to the electronic device 800, based on the message being transmitted to the external device 810. The bounce back message may include a TP-RP. The server 500 may set a value of TP-RP to be 1, based on the external device 810 being connected to the satellite 806.

In operation 920, based on the message transmission not being completed, the server 500 may determine a message transmission count. In operation 930, the server 500 may determine whether the message transmission count exceeds a designated count.

In operation 932, the server 500 may attempt to transmit a message again, based on the message transmission count not exceeding a designated level. In this case, the server 500 may perform operation 920, and may attempt to transmit the message again until the message transmission count exceeds the designated level.

The server 500 may route the SMS by using the terrestrial network (e.g., the SMSC of the external device 810) rather than the non-terrestrial network in operation 934, based on the message transmission count exceeding the designated level in operation 930. The routing may refer to an operation of selecting an optimal path in a process in which data is transferred.

Thereafter, in operation 936, the server 500 may set the value of TP-RP to 0 and transmit a bounce back message to the electronic device 800. For example, the server 500 may set the value of TP-RP to 0 to configure a path so that the external device 810 is not connected to the satellite and the electronic device 800 transmits an SMS to the SMSC of the electronic device 800.

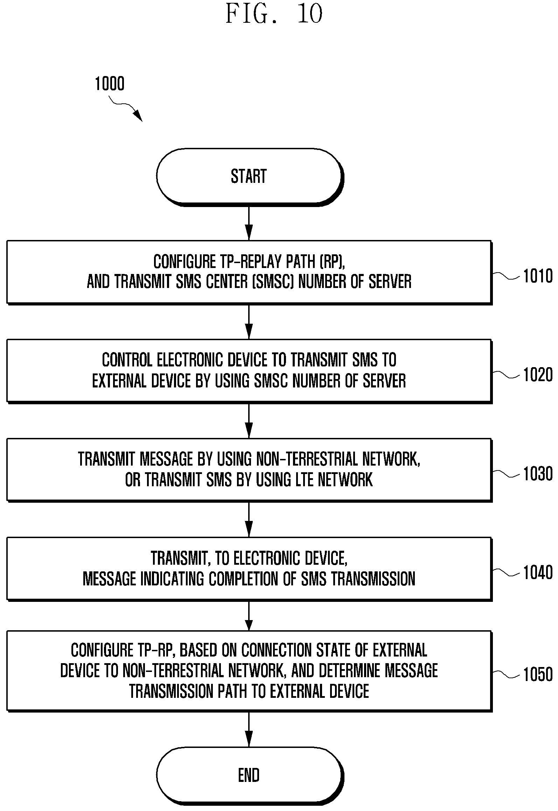

FIG. 10 is a flowchart illustrating a message transmission method by a server according to an embodiment.

The operations described through FIG. 10 may be implemented based on instructions that may be stored in a computer recording medium or memory (e.g., the memory 530 of FIG. 5). The illustrated method 1000 may be executed by a server (e.g., the server 500 of FIG. 5, the server 605 of FIG. 6, the server 705 of FIG. 7, or the server 802 of FIG. 8) described above with reference to FIGS. 1 to 8, and the above-described technical features will be omitted below. The order of the operations in FIG. 10 may be changed, some operations may be omitted, and some operations may be simultaneously performed.

In operation 1010, the server 500 may configure a TP-replay path (RP) and transmit an SMS center (SMSC) number of the server to an electronic device (e.g., the electronic device 800 of FIG. 8). In this case, the TP-RP may be configured as 1. The electronic device 800 may include the reception UE 710 of FIG. 7 or the reception UE 710 of FIG. 6. In addition, the server 500 may also transmit an address (a TP-originated address) of an external device (e.g., the external device 810 of FIG. 8). The external device 810 may include the transmission UE 700 of FIG. 7 or the transmission UE 600 of FIG. 6.

In operation 1020, the server 500 may control the electronic device 800 to transmit an SMS to the external device 810 by using the SMSC number of the server. When the server 500 receives an SMS for transmission to the external device 810 from the electronic device 800, the server 500 may transmit a bounce back message in which the TP-RP is set to 1 for satellite path configuration. The electronic device 800 may identify that the TP-RP is set to 1 in the bounce back message and determine that the external device 810 is connected to the non-terrestrial network.

In operation 1030, the server 500 may transmit a message by using a non-terrestrial network (e.g., satellite network) or transmit an SMS to a cellular network (e.g., LTE network). The server 500 may determine a transmission path differently, based on the communication connection state of the external device 810. The server 500 may convert the SMS into a message in a text format and transmit the same by using a non-terrestrial network when the external device 810 is connected to the non-terrestrial network. When the external device 810 is not connected to the non-terrestrial network, the server 500 may transmit the SMS by using the cellular network (e.g., LTE network).

In operation 1040, the server 500 may transmit, to the electronic device 800, a message indicating that SMS transmission to the external device 810 has been completed. The server 500 may transmit a message to the external device 810 by using a non-terrestrial network. Alternatively, the server 500 may transmit an SMS to the external device 810 by using a terrestrial network (e.g., LTE network).

According to an embodiment, the server 500 may transmit, to the electronic device 800, a bounce back message indicating that message transmission is completed, based on the message from the electronic device 800 to the external device 810 being transmitted.

In operation 1050, the server 500 may configure a TP-RP, based on the connection state of the external device 810 to the non-terrestrial network. The server 500 may transmit a bounce back message to the electronic device 800. The bounce back message may include the TP-RP.

According to an embodiment, the server 500 may configure the TP-RP to 1, based on the external device 810 being connected to the non-terrestrial network, and configure a path to transmit a message through the non-terrestrial network. The server 500 may configure the TP-RP to 0, based on the external device 810 not being connected to the non-terrestrial network, and configure the SMS be transmitted using the SMSC number of the electronic device 800, rather than the non-terrestrial network.

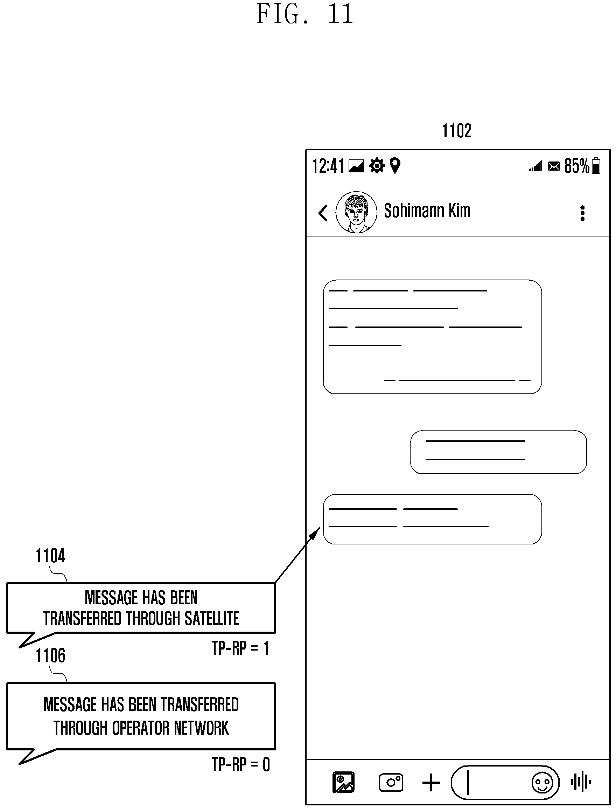

FIG. 11 illustrates a situation in which a transmission result of a message is displayed on an electronic device and a transmission path of a message to be transmitted thereafter is configured according to an embodiment.

According to FIG. 11, an electronic device (e.g., the electronic device 800 of FIG. 8, the electronic device 101 of FIG. 1, or the reception UE 710 of FIG. 7) may receive a message from an external device (e.g., the external device 810 of FIG. 8 or the transmission UE 700 of FIG. 7). The electronic device 800 may receive a message of an external device by using the SMS application. The electronic device 800 may need to install a separate application to transmit the same to an external device while not having a modem capable of using a non-terrestrial network.

However, the electronic device 800 according to the disclosure may provide a method of transmitting an SMS to an external device connected to a non-terrestrial network, without installing a separate application in a UE having no modem capable of using a non-terrestrial network.

A server (e.g., the server 500 of FIG. 5) may identify whether a message received from the external device 810 has been transmitted using a non-terrestrial network. In addition, the server 500 may determine whether the external device is currently connected to the non-terrestrial network for communication or capable of performing communication through the cellular network. The electronic device 800 may display the contents of the received message on the display 1102, and display whether the received message has been transmitted using the non-terrestrial network.

The server 500 may configure the TP-RP to 1, based on the reception of the message received from the external device 810, via the non-terrestrial network. The TP-RP may be included in the bounce back message. The server 500 may transmit the bounce back message, based on reception of an SMS or a message of the electronic device 800.

According to an embodiment, the electronic device 800 may determine, using the TP-RP in the bounce back message, whether the external device 810 is connected to the non-terrestrial network. For example, the electronic device 800 may determine that the external device 810 is connected to the non-terrestrial network, based on the TP-RP being 1. Thereafter, the electronic device 800 may display, to the user, that the message has been transmitted to the external device 810 through the non-terrestrial network (e.g., satellite), as illustrated in reference numeral 1104 in the drawing.

The electronic device 800 may determine that the external device 810 is not connected to the non-terrestrial network, based on the TP-RP being 0. Thereafter, the electronic device 800 may display, to the user, that the message has been transmitted to the external device 810 through a terrestrial network (e.g., LTE network, cellular network, or operator network), as illustrated in reference numeral 1106 in the drawing.

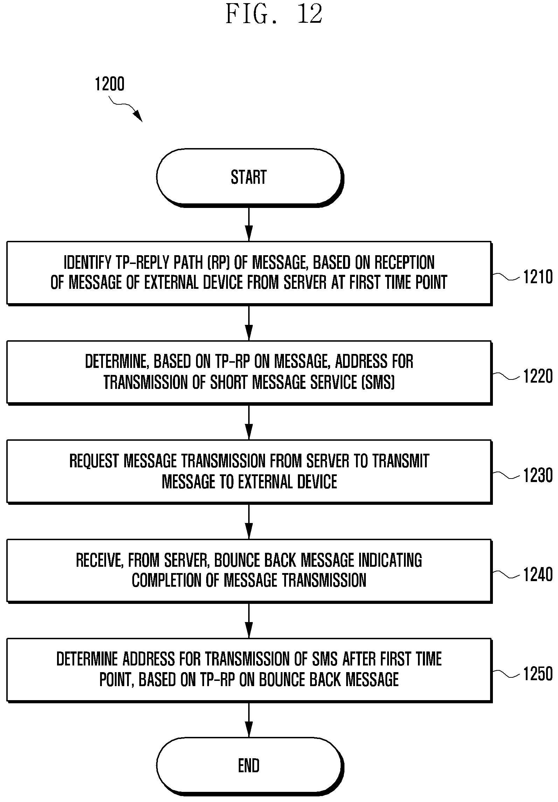

FIG. 12 is a flowchart illustrating a message transmission method by an electronic device according to an embodiment.

The operations described through FIG. 12 may be implemented based on instructions which may be stored in a computer recording medium or a memory (e.g., the memory 130 of FIG. 1). The illustrated method 1200 may be executed by an electronic device (e.g., the electronic device 101 of FIG. 1, the reception UE 610 of FIG. 6, the reception UE 710 of FIG. 7, or the electronic device 800 of FIG. 8) described above through FIGS. 1 to 8, and the above-described technical features will be omitted below. The order of operations in FIG. 12 may be changed, some operations may be omitted, and some operations may be simultaneously performed.

In operation 1210, the electronic device 101 may identify a TP-reply path (RP) of a message, based on a message of an external device being received from a server (for example, the server 500 of FIG. 5). The electronic device 101 may identify a TP-RP value, based on the operation in 3GPP 123.040 when transmitting the message by using a basic SMS application.

In operation 1220, the electronic device 101 may determine an address for transmission of a short message service (SMS), based on the TP-RP in the message.

According to an embodiment, if the TP-RP is 1, the electronic device 101 may transmit to the SMSC number of the server 500 and the number (TP-OA) of the external device. The electronic device 101 may transmit the SMS by using the SMSC stored in the SIM of the electronic device 101 when the TP-RP is 0.

In operation 1230, when the TP-RP is 1, the electronic device 101 may request message transmission from the server 500 in order to transmit a message to the external device. The electronic device 101 may transmit the message through a message transmission path determined by the TP-RP.

In operation 1240, the electronic device 101 may receive, from the server, a bounce back message indicating that the SMS or the message has been transmitted.

According to an embodiment, the processor 120 may determine that the transmission of the SMS or the message to the external device has been successfully performed, based on the reception of the bounce back message, and display, on the display, information indicating that the transmission of the SMS or the message to the external device has been successfully performed.

According to an embodiment, the processor (e.g., the processor 120 of FIG. 1) may determine whether the external device is connected to the non-terrestrial network, based on the TP-RP value in the bounce back message.

In operation 1250, the electronic device 101 may determine an address for transmission of a short message service (SMS), based on the TP-RP on the bounce back message.

According to an embodiment, the processor 120 may transmit an SMS by using a SMS center (SMSC) number of the server 500 and the address of the external device, based on the external device being connected to the non-terrestrial network.

According to an embodiment, the processor 120 may transmit an SMS by using an SMSC number stored in a SIM of the electronic device 101, instead of a non-terrestrial network, based on the external device not being connected to the non-terrestrial network.

A server (500, 605, 705, or 802) may include a processor (e.g., the processor 510 of FIG. 5), a communication circuit (e.g., the communication circuit 520 of FIG. 5), and a memory (e.g., the memory 530 of FIG. 5), wherein the processor 510, based on instructions stored in the memory being executed, configures a TP-replay path (RP) on an electronic device (800, 710, 610, or 101), transmits an SMS center (SMSC) number of the server and an address (TP-originated address) of an external device (810, 700, or 600) to a number (TP-destination address) of the electronic device, controls the electronic device to transmit an SMS to the external device by using the SMSC number of the server and the address of the external device, based on a value of the TP-RP, transmits a message by using a non-terrestrial network or transmit the SMS by using an LTE network, based on a connection state of the external device to the non-terrestrial network, transmits a message indicating that SMS transmission has been completed to the electronic device, based on completion of message transmission or SMS transmission to the external device, configures the value of the TP-RP, based on the connection state of the external device to the non-terrestrial network, and determines an SMS transmission path to the external device, based on the value of the TP-RP.

According to an embodiment, the processor may determine whether the external device is connected to the non-terrestrial network, and may convert, based on the external device being connected to the non-terrestrial network, the SMS of the electronic device into a message by using the non-terrestrial network, and transmit the same.

According to an embodiment, the processor may, in case that the external device is connected to the server through an Internet protocol (IP), determine, using a keep alive packet, whether the external device and a TCP/IP socket are connected, and may determine, based on the external device and the TCP/IP socket being connected, that the external device is connected to the non-terrestrial network.

According to an embodiment, the processor may, in case that the external device is connected to the server through a non-IP, convert the SMS and transmit the same to a C-IoT core network by using a secure channel, and may determine, based on detection of an error related to the transmitted SMS, that the external device is connected to the non-terrestrial network.

According to an embodiment, the processor may execute home location register (HLR) lookup, request user information of a mobile station integrated system digital network (MSISDN) of the external device, and determine, based on the user information of the external device, whether the external device is connected to the non-terrestrial network.

According to an embodiment, the processor may attempt retransmission, based on failure in transmission of the message to the external device by using the non-terrestrial network, and may modify, based on a transmission attempt count exceeding a designated level, a TP-RP value on a bounce back message so that the SMS is transmitted using an SMSC number stored in a SIM of the electronic device, instead of the non-terrestrial network.

According to an embodiment, the processor may transmit, based on the completion of the SMS transmission to the external device, a message indicating that the SMS transmission has been completed to the electronic device, and may configure, based on the connection state between the external device and the non-terrestrial network, different SMS transmission paths of the electronic device.

According to an embodiment, the processor may configure, based on the external device being connected to the non-terrestrial network, a value of the TP-RP to enable the electronic device to transmit the SMS to the external device by using the non-terrestrial network through the server.

According to an embodiment, the processor may configure, based on the external device not being connected to the non-terrestrial network, a value of the TP-RP to enable the SMS to be transmitted to the external device by using an SMSC number stored in a SIM of the electronic device.

According to an embodiment, the processor may configure a short message type of a TP-protocol ID so that a hidden SMS can be used, and may perform control so that an SMS transmission path to the external device is determined without displaying a message on the electronic device.

## Claims

1. A server (500, 605, 705, or 802) comprising:
at least one processor (510);
a communication circuit (520); and
a memory (530) configured to store instructions,
wherein the instructions, when executed by the at least one processor (510), control the server to:
configure a TP-replay path (RP) on an electronic device (800, 710, 610, or 101), and transmit an SMS center (SMSC) number of the server and an address (TP-originated address) of an external device (810, 700, or 600) to a number (TP-destination address) of the electronic device;
control the electronic device to transmit an SMS to the external device by using the SMSC number of the server and the address of the external device, based on a value of the TP-RP;
transmit a message by using a non-terrestrial network or transmit the SMS by using an LTE network, based on a connection state of the external device to the non-terrestrial network;
transmit, to the electronic device, a message indicating that SMS transmission has been completed, based on completion of message transmission or SMS transmission to the external device; and
configure the value of the TP-RP, based on the connection state of the external device to the non-terrestrial network, and determine an SMS transmission path to the external device, based on the value of the TP-RP.

2. The server of claim 1, wherein the instructions, when executed by the at least one processor, cause the server to:
determine whether the external device is connected to the non-terrestrial network; and
based on that the external device is connected to the non-terrestrial network, convert the SMS of the electronic device into a message and transmit the message by using the non-terrestrial network.

3. The server of claim 2, wherein the instructions, when executed by the at least one processor, control the server to:
in case that the external device is connected to the server via an Internet protocol (IP), determine, using a keep alive packet, whether the external device and a TCP/IP socket are connected; and
based on that the external device and the TCP/IP socket are connected, determine that the external device is connected to the non-terrestrial network.

4. The server of claim 2, wherein the instructions, when executed by the at least one processor, control the server to:
in case that the external device is connected to the server via a non-IP, convert and transmit the SMS to a C-IoT core network by using a secure channel; and
based on detection of an error associated with the transmitted SMS, determine that the external device is connected to the non-terrestrial network.

5. The server of claim 2, wherein the instructions, when executed by the at least one processor, control the server to:
execute home location register (HLR) lookup;
request mobile station integrated system digital network (MSISDN)-related user information of the external device; and
based on the user information of the external device, determine whether the external device is connected to the non-terrestrial network.

6. The server of claim 2, wherein the instructions, when executed by the at least one processor, control the server to:
attempt retransmission, based on failure of message transmission to the external device using the non-terrestrial network; and
based on that a transmission attempt count exceeds a designated level, modify a TP-RP value on a bounce back message to transmit the SMS by using an SMSC number stored in an SIM of the electronic device, instead of the non-terrestrial network.

7. The server of claim 1, wherein the instructions, when executed by the at least one processor, control the server to:
based on the completion of the SMS transmission to the external device, transmit, to the electronic device, a message indicating that the SMS transmission has been completed; and
based on that the external device is connected to the non-terrestrial network, configure a different SMS transmission path of the electronic device.

8. The server of claim 7, wherein the instructions, when executed by the at least one processor, control the server to, based on that the external device is connected to the non-terrestrial network, configure a value of the TP-RP to enable the electronic device to transmit the SMS to the external device through the server by using the non-terrestrial network.

9. The server of claim 7, wherein the instructions, when executed by the at least one processor, control the server to, based on that the external device is not connected to the non-terrestrial network, configure a value of the TP-RP to enable the electronic device to transmit the SMS to the external device by using an SMSC number stored in a SIM of the electronic device.

10. The server of claim 1, wherein the instructions, when executed by the at least one processor, control the server to:
configure a short message type of a TP-protocol ID to enable use of a hidden SMS; and
perform control to determine an SMS transmission path to the external device without displaying a message on the electronic device.

11. An electronic device (800, 710, 610, or 101) comprising:
at least one processor (120); and
a memory (130) configured to store instructions,
wherein the instructions, when executed by the at least one processor, control the electronic device to, based on execution of the instructions stored in the memory:
based on reception of a message of an external device (810, 700, or 600) from a server (500, 605, 705, or 802), identify a TP-reply path (RP) of the message;
based on the TP-RP on the message, determine an address for transmission of a short message service (SMS);
request message transmission from the server to transmit the message to the external device;
receive, from the server, a bounce back message indicating that transmission of the SMS has been completed; and
after receiving the bounce back message, determine an address for transmission of the SMS to the external device, based on a TP-RP on the bounce back message.

12. The electronic device of claim 11, wherein the instructions, when executed by the at least one processor, control the electronic device to, based on a value of the TP-RP on the bounce back message, determine whether the external device is connected to a non-terrestrial network.

13. The electronic device of claim 12, wherein the instructions, when executed by the at least one processor, control the electronic device to, based on that the external device is connected to the non-terrestrial network, transmit the SMS by using an SMS center (SMSC) number of the server and an address of the external device.

14. The electronic device of claim 12, wherein the instructions, when executed by the at least one processor, control the electronic device to, based on that the external device is not connected to the non-terrestrial network, transmit the SMS by using an SMSC number stored in a SIM of the electronic device, instead of the non-terrestrial network.

15. The electronic device of claim 11, wherein the instructions, when executed by the at least one processor, control the electronic device to:
based on reception of the bounce back message, determine that the SMS or the message has been successfully transmitted to the external device; and
display, on a display, information indicating that the SMS or the message has been successfully transmitted to the external device.
